# EUROPEAN PATENT SPECIFICATION

(11) **EP 2 033 615 B1**
(45) Date of publication and mention of the grant of the patent: **10.05.2017**
(21) Application number: 07790212.0
(22) Date of filing: 26.06.2007
(51) Int. Cl.: A61J 1/10, B32B 27/00, B65D 30/02, B65D 65/40, B32B 27/32

(54) **LIQUID CONTAINER**
FLÜSSIGKEITSBEHÄLTER
RÉCIPIENT POUR LIQUIDE

(30) Priority: 28.06.2006 JP 2006177513
(43) Date of publication of application: 11.03.2009
(73) Proprietor: FUJIMORI KOGYO CO., LTD., Tokyo 103-0002 (JP)
(72) Inventor: SUZUKI, Toyoaki, Tokyo 103-0002 (JP); MIURA, Koichi, Tokyo 103-0002 (JP); KISHIMOTO, Akemi, Tokyo 103-0002 (JP); KIMURA, Kunihiko, Fukushima-shi, Fukushima 960-0280 (JP); KATO, Yoshikazu, Fukushima-shi, Fukushima 960-0280 (JP); ITO, Yukie, Fukushima-shi, Fukushima 960-0280 (JP)
(74) Representative: Hartz, Nikolai
(86) International application number: PCT/JP2007/000689
(87) International publication number: WO 2008/001496

(56) References cited:
- EP-A1- 1 602 350
- WO-A1-2006/035718
- JP-A- 5 277 154
- JP-A- 04 276 253
- JP-A- 05 004 638
- JP-A- 06 197 965
- JP-A- 11 070 624
- JP-A- 2004 167 800
- JP-A- 2005 254 508
- JP-A- 2005 525 952

## Description

### Technical Field

The present invention relates to a liquid container suitable for storing an injection liquid containing a drug that can be adsorbed by resin or that can permeate resin such as nitroglycerin, a protein, hyaluronic acid, a vitamin, a trace element, or a radical scavenger.

### Background Art

So-called soft bag pharmaceutical products, which have been developed in recent years, are employed as drip infusion products. Such a soft bag pharmaceutical product is produced by diluting a drug(s) for injection use in advance and charging with the drug(s) a flexible container made of a plastic resin or the like. Upon use, soft bag pharmaceutical products can be easily handled and set within a short time, and disposal thereof is easier than that of glass bottles and ampoules. Therefore, soft bag pharmaceutical products are advantageously used in the field. One promising application of a soft bag pharmaceutical product is a nitroglycerin injection liquid, which is in some cases used as a drip infusion for controlling the blood pressure of a patient during surgery and for treating acute cardiac failure (including an acute increment stage of chronic cardiac failure) and unstable angina. Replacement of a glass container with a soft bag will also be encouraged for a drug such as a protein (human plasma-derived albumin or albumin produced through a recombination technique), a hormone, a vitamin, or hyaluronic acid, from the viewpoints of reduction of possible breakage and environmental concerns.

Meanwhile, some drugs including nitroglycerin, proteins (e.g., albumin and a hormone), hyaluronic acid, vitamins, trace elements, and radical scavengers are known to be adsorbed by or to permeate a film produced by molding vinyl chloride resin or a polyolefin-based resin such as polyethylene or polypropylene, these resins being generally employed as material for drug containers and medical apparatus. This property is a problem to be solved in the development of soft bag pharmaceutical products. At present, some polycycloolefin-based resins are known to be a material exhibiting no drug-adsorbability or drug-permeability. For example, Patent Documents 1 and 2 disclose that a syringe having an outer pipe made of a polycycloolefin-based resin is useful for producing a pre-filled syringe pharmaceutical product containing a drug that can be adsorbed by resin.

As compared with a polyolefin such as polyethylene, polycycloolefin-based resin forms a high-density, 3-dimensional structure. Therefore, polycycloolefin-based resin film tends to have high hardness and fragility. For forming a soft bag, polycycloolefin-based resin film is generally laminated with a film such as polyethylene-based resin film or polypropylene-based resin, to thereby form a laminated film. Patent Document 3 discloses a wrapping bag formed of a laminated film having an outer layer of polyolefin-based resin and an inner layer of polycycloolefin-based resin. The disclosed laminated film is suitable for producing an injection liquid containing a drug that can be adsorbed by resin, since the film can receive high-pressure steam sterilization and prevents adsorption of drugs. Patent Document 4 discloses a soft bag formed of a laminated film including a layer of polycycloolefin-based resin or a resin mixture containing polycycloolefin-based resin and a layer made of polyester-based resin or polyolefin-based resin. In the aforementioned soft bags made from multilayer film, the innermost layer is preferably formed of polycycloolefin-based resin, from the viewpoint of prevention of drug adsorption. Such soft bags essentially have a port member for discharging a drug, and the port member is also formed of polycycloolefin-based resin from the viewpoint of compatibility and adhesion between two resins. However, a port member made of polycycloolefin-based resin is expensive and is readily broken in the case of falling, which is problematic. Therefore, preferred is use of a polyethylene or polypropylene port member, which is inexpensive and resistant to shock impact breakage in the case of, for example, falling.

When a port member made of polyethylene or polypropylene is employed in a laminated film, a polyethylene-based resin layer or a polypropylene-based resin layer is formed on the inner side of the polycycloolefin-based resin layer. In this case, the polyethylene-based resin layer or the polypropylene-based resin layer comes into direct contact with a drug liquid containing, for example, nitroglycerin, a protein (e.g., albumin or a hormone), hyaluronic acid, a vitamin, a trace element, or a radical scavenger, and the amount of drug component(s) would vary due to adsorption or permeation. Patent Document 5 discloses a drug container for solving the problem, the container being formed of a multilayer film including a barrier layer formed from a resin mixture of a polycycloolefin-based resin and a specific polyethylene-based resin. The multilayer film of the drug container includes a polyethylene-based resin serving as a seal layer which comes into contact with a drug liquid. When the thickness of the seal layer is controlled to a small thickness (5 to 80 µm), and a barrier layer is formed on the outer side of the seal layer, adsorption of the drug can be prevented. Patent Document 3 discloses a soft bag having a polyethylene port member and a tri-layer film in which a polycycloolefin-based resin is sandwiched by polyethylene layers. The disclosed soft bag has a polycycloolefin-based resin layer corresponding to the aforementioned barrier layer on the outer side of a 50 µm-thickness polyethylene layer corresponding to the aforementioned seal layer. After post-sterilization storage at 40°C for one month, the nitroglycerin content was found to decrease by 7.0%. When polycycloolefin is employed as a resin mixture with another resin, drug storage stability and other properties of the soft bag are impaired in some cases. In fact, the container disclosed in Patent Document 5 also exhibited a decrease of 3.0% to 7.0% in nitroglycerin after post-sterilization storage at 60°C for two weeks, indicating poor storage stability.

Patent Document 6 discloses a transfusion bag for medical treatment. Patent Document 7 discloses a multiple compartment container. Patent Document 8 discloses a laminated film which has little change of haze after elevated temperature sterilization treatment when used as a bag body having a good bag dropping-proof nature and into which a pinhole is not generated easily. Patent document 9 relates to a laminate containing a cycloolefinic copolymer with improved interlaminar adhesive properties and resistance to delamination between the cycloolefin-based copolymer layer and an olefin-based layer. Patent document 10 describes a medical container comprising a body for containing a medicament characterized in that the body is formed of a multilayered film which comprises a layer formed of a linear polyolefin and adjacent thereto, a layer formed of a certain cyclic polyolefin, without mention of its glass transition temperature.
Patent Document 1: JP-A-2003-024415
Patent Document 2: JP-A-2004-298220
Patent Document 3: JP-A-2005-254508
Patent Document 4: JP-A-2006-081898
Patent Document 5: JP-A-2005-525952
Patent Document 6: JP-A-1993-277154
Patent Document 7: EP 1 602 350 A1
Patent Document 8: JP-A-2004-167800
Patent Document 9: JP-A-1999-070624
Patent document 10: EP-A-1 806 118

### Disclosure of the Invention

### Problems to be Solved by the Invention

An object of the present invention is to provide a liquid container, which exhibits excellent storage stability and impact resistance and which is applicable for producing a soft bag pharmaceutical product of an injection liquid containing nitroglycerin, a protein (e.g., albumin or a hormone), hyaluronic acid, a vitamin, a trace element, a radical scavenger, and the like.

### Means for Solving the Problems

The present inventors have carried out extensive studies on the element and composition of a laminate film for producing a soft bag and, quite surprisingly, have found that through provision of a barrier layer containing, as a predominant component, a polycycloolefin-based resin having a glass transition temperature (Tg) higher by 5°C or more than the temperature at which the container is subjected to thermal treatment or high-pressure steam sterilization and having a glass transition temperature of 130°C or higher, the barrier layer being adjacent to a seal layer, there can be produced a container for a soft bag pharmaceutical product which prevents adsorption and permeation of a drug such as nitroglycerin, a protein (e.g., albumin or a hormone), hyaluronic acid, a vitamin, a trace element, or a radical scavenger, even when the seal layer is formed of a polyethylene-based resin; which has excellent drug storage stability; and which exhibits excellent impact resistance through combination with a port member made of polyethylene or polypropylene. The present invention has been accomplished on the basis of this finding.

Accordingly, the present invention provides a liquid container formed of a multilayer film and/or multilayer sheet according to claims 1 to 5, characterized in that the multilayer film and/or multilayer sheet has a barrier layer containing, as a predominant component, a polycycloolefin-based resin having a glass transition temperature higher by 5°C or more than the temperature at which the container is subjected to thermal treatment or high-pressure steam sterilization, and a seal layer containing, as a predominant component, a polyethylene-based resin, and the barrier layer is provided adjacent to the seal layer.

The present invention also provides a pharmaceutical product according to claims 6 to 9 containing a drug liquid that can be adsorbed by a resin, the drug liquid being contained in a liquid container formed of a multilayer film and/or multilayer sheet according to claims 1 to 5, characterized in that the multilayer film and/or multilayer sheet has a barrier layer containing, as a predominant component, a polycycloolefin-based resin having a glass transition temperature higher by 5°C or more than the temperature at which the container is subjected to thermal treatment or high-pressure steam sterilization, and a seal layer containing, as a predominant component, a polyethylene-based resin, and the barrier layer is provided adjacent to the seal layer.

### Effects of the Invention

The liquid container according to the present invention can solve problems such as adsorption and permeation of a drug such as nitroglycerin, a protein (e.g., albumin or a hormone), hyaluronic acid, a vitamin, a trace element, or a radical scavenger, and exhibits excellent drug storage stability and impact resistance. Even when the liquid container is subjected to thermal treatment including high-pressure steam sterilization, sticking does not occur. Thus, the liquid container of the invention is very useful in practice.

### Detailed Description of the Invention

In the present invention, the term "seal layer" refers to a component layer of the multilayer film and/or multilayer sheet for forming a liquid container, which component layer serves as the innermost layer of the container and comes into direct contact with a drug contained in the container.

An additional adhesive layer or an adhesive resin layer may be disposed between the seal layer and the barrier layer. Such an adhesive is preferably a two-liquid curing type polyester-urethane adhesive or polyether-urethane adhesive. The adhesive resin layer may employ a known resin, so long as the resin provides excellent adhesion with respect to a counter material of a different resin. Examples of the adhesive resin include Admer (product of Mitsui Chemicals, Inc.), Modic (product of Mitsubishi Chemical Co., Ltd.), DLZ (product of Tosoh Corporation), and metallocene-type linear low-density polyethylene having a density of 0.91 or lower. On the surface of the barrier layer opposite the seal layer, several component layers which modulate strength, softness, gas-barrier property, and vapor-barrier property required as a liquid container, may also be laminated. Examples of the method of laminating such additional layers on the barrier layer include known techniques such as dry lamination, extrusion coating, extrusion lamination, co-extrusion lamination (e.g., co-extrusion blowing or co-extrusion T-die method), co-extrusion water-cooled blowing, and heat lamination. These techniques may be employed singly or in combination. Examples of the material which imparts gas-barrier or vapor-barrier property to the liquid container and which may be employed in the invention include silica- or alumina-vapor-deposited PET film, silica- or alumina-vapor-deposited nylon film, aluminum-vapor-deposited PET, aluminum-vapor-deposited nylon, aluminum foil, EVOH, PVA, PVDC, and MXD nylon.

The glass transition temperature of the polycycloolefin is more preferably 130 to 170°C, most preferably 132 to 150°C. In the present invention, the term "glass transition temperature" refers to a temperature determined in accordance with JIS K7121 (DSC). Generally, glass transition temperature is a well-known physical parameter characterizing polycycloolefin-based resin. However, no relationship between glass transition temperature and drug adsorbability or drug permeability has ever been known. Specifically, Patent Document 3 discloses that the polycycloolefin-based resin employed in the sealant layer has a glass transition temperature of 100 to 170°C, preferably 120°C or higher, and that such a limitation in range of glass transition temperature is provided in order to prevent deformation or breakage of a bag during high-pressure steam sterilization at 110°C or higher. However, Patent Document 3 does not disclose relationships between the glass transition temperature of the polycycloolefin-based resin and adsorption and storage stability of a drug, thermal treatment, high-pressure steam sterilization, etc. Patent Document 5 discloses that the polycycloolefin-based resin employed in the seal layer and the barrier layer more preferably has a glass transition temperature of 80 to 150°C. However, Patent Document 5 does not disclose that relationships between the glass transition temperature and adsorption and storage stability of a drug in the seal layer. Under such circumstances, the present inventors have found that when the polycycloolefin-based resin has a higher glass transition temperature, the effect of suppressing drug adsorption and the effect on drug storage stability are enhanced. The inventors have also found that when the barrier layer adjacent to the seal layer that is formed of polyethylene-based resin is formed from the polycycloolefin-based resin having a glass transition temperature 130°C or higher, storage stability of a drug is enhanced to a great extent. The inventors have found that the effect of enhancing drug storage stability can be attained to a great extent, especially when the drug is subjected to a thermal treatment at 60°C or higher or high-pressure steam sterilization at 105°C or higher in a pharmaceutical production step. The thermal treatment at 60°C or higher is carried out mainly for inactivating viruses, and high-pressure steam sterilization at 105°C or higher is carried out for sterilization.

The inventors have also found that incorporation of a resin other than polycycloolefin-based resin into the barrier layer reduces the effect of preventing adsorption or permeation of a drug, thereby lowering storage stability.

The method and mechanism of polymerization of a cycloolefin monomer employed in the present invention may be ring-opening polymerization or additional polymerization. In the case where a plurality of monomers are used in combination, a known method and mechanism of polymerization may be employed. For example, a mixture of monomers may be copolymerized, or an additional monomer may be added to a polymer having a certain polymerization degree, to thereby form a block copolymer.

The structure of the polycycloolefin-based resin is represented by the following structure (1): 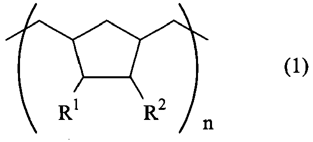 (wherein R¹ and R², which may be identical to or different from one another, each represent a C1 to C20 organic group; R¹ and R² may form a ring; and n represents an integer of ≥1). The inventors have found that when the polycycloolefin-based resin is represented by formula (1), the effect of enhancing drug storage stability is attained to a high degree.

Specific examples of the C1 to C20 organic group, which are not limited to, include alkyl groups such as methyl, ethyl, n-propyl, i-propyl, n-butyl, i-butyl, sec-butyl, t-butyl, i-pentyl, t-pentyl, n-hexyl, n-heptyl, n-octyl, t-octyl(1,1-dimethyl-3,3-dimethylbutyl), 2-ethylhexyl, nonyl, decyl, undecyl, dodecyl, tridecyl, tetradecyl, pentadecyl, hexadecyl, heptadecyl, octadecyl, nonadecyl, and icosyl; cycloalkyl groups such as cyclopentyl, cyclohexyl, cycloheptyl, and cyclooctyl; alkylcycloalkyl groups such as 1-methylcyclopentyl, 1-methylcyclohexyl, and 1-methyl-4-i-propylcyclohexyl; alkenyl groups such as allyl, propenyl, butenyl, 2-butenyl, hexenyl, and cyclohexenyl; aryl groups such as phenyl, naphthyl, methylphenyl, methoxyphenyl, biphenyl, phenoxyphenyl, chlorophenyl, and sulfophenyl; and aralkyl groups such as benzyl, 2-phenylethyl (phenethyl), α-methylbenzyl, and α,α-dimethylbenzyl. These organic groups may be employed singly or in combination of two or more species.

The glass transition temperature of such polycycloolefins may be appropriately tuned through appropriately selecting the substituents and the values of n in formula (1).

The polycycloolefin represented by formula (1) may be a commercial product. For example, Zeonex and Zeonoa (products of Nippon Zeon Co., Ltd.) are preferably used.

In the present invention a polycycloolefin represented by formula (1) is employed. The polycycloolefin of the invention is preferably formed solely of a resin represented by formula (1) and containing no other resins.

In a drug container made of a polymer, an originally intended amount of the drug often fails to be maintained due to adsorption, permeation, or missing, since the drug contained in the container is captured by polymer chains of the polymer forming the container. Through molecule-level analysis, polymer chains of a polymer material are rotated via microbrownian motion. When the temperature of the polymer material is equal to or higher than the glass transition temperature, microbrownian motion of the molecular chains is promoted, thus, the polymer material becomes softer. As a result, a low-molecular-weight drug is readily captured by the polymer material, resulting in adsorption, permeation, or missing of the drug. Thus, the amount of effective component decreases. Particularly, glass transition temperature is a temperature at which microbrownian motion of polymer chains occurs, and therefore, reflects the ease of polymer chain motion. Studies conducted by the present inventors have shown that material design of a drug container based on the glass transition temperature is the best solution for preventing problematic adsorption of a drug on the container and permeation or missing of the drug, which would otherwise cause a decrease in the amount of effective component. Since movement of polymer chains is determined by internal rotation of the chains and steric hindrance, the higher the internal rotation barrier, the higher the glass transition temperature. Such a polymer material can prevent mass transfer of a drug such as adsorption, permeation, or missing. By incorporating a large number of aromatic rings or hetericyclic rings, which has high internal rotation barrier, into backbones, a polymer material having high glass transition temperature can be obtained. An example of such polymer material is a polymer represented by formula (1). More preferably, in formula (1), each of R¹ and R² is a heterocyclic ring, and the "n" is adjusted to ≥3, whereby the internal rotation barrier is considerably elevated, and a polycycloolefin having a glass transition temperature of 130°C or higher can be readily synthesized. The structure of formula (1) does not contain ethylene repeating units (-CH₂CH₂-)ₘ. Therefore, larger steric hindrance is realized, and a higher internal rotation barrier can be attained. Generally, polymers formed of ethylene repeating units such as polyethylene have a molecular structure having very small steric hindrance, and rotational motion of molecules is readily promoted at low temperature. When an element of a liquid container is produced solely from a polymer having such a molecular structure, a drug contained in the container is readily adsorbed by the molecular chains, and permeation or missing of the drug occurs, thereby reducing the amount of effective component.

After introduction of a drug into the container, the container is preferably subjected to thermal treatment at 60°C or higher temperature or to high-pressure steam sterilization at 105°C or higher, more preferably at 121°C. Thus, another very important factor is that the molecular structure is designed so that microbrownian motion does not occur at the above temperatures, and the glass transition temperature is determined. The barrier layer of the liquid container is required to have a glass transition temperature higher by 5°C or more than the temperature at which the container is subjected to thermal treatment or high-pressure steam sterilization. If the glass transition temperature is near the sterilization temperature or lower, the aforementioned microbrownian motion occurs during thermal treatment or high-pressure steam sterilization, and rotation of molecular chains occurs. Thus, adsorption of a drug contained in the container and permeation or missing of the drug cannot be prevented, thereby reducing the amount of effective component. The optimum glass transition temperature of polycycloolefin for preventing such phenomena must be higher by 5°C or more than the temperature at which the container is subjected to thermal treatment or high-pressure steam sterilization. The inventors' studies have shown that a preferable glass transition temperature of 130°C or higher is most effective.

The barrier layer of the present invention contains a polycycloolefin-based resin having a glass transition temperature higher by 5°C or more than the temperature at which the container is subjected to thermal treatment or high-pressure steam sterilization, and having a glass transition temperature of 130°C or higher. The barrier layer may contain a resin other than the aforementioned polycycloolefin-based resin in such an amount that the effect of the invention is not impaired. However, the barrier layer preferably contain no such additional resin.

In the present invention, the barrier layer preferably has a thickness of 5 to 40 µm, more preferably 10 to 30 µm, from the viewpoints of drug storage stability and softness of the container.

In the present invention, the polyethylene-based resin employed in the seal layer may be linear low-density polyethylene and/or high-density polyethylene, which are generally employed for producing drug containers. The linear low-density polyethylene has a melting point (melting peak temperature determined in accordance with JIS K7121 (DSC)) of 110 to 130°C. The high-density polyethylene has a melting point (melting peak temperature determined in accordance with JIS K7121 (DSC)) of 120 to 145°C, preferably 130 to 140°C. Examples of preferably employed linear low-density polyethylenes and high-density polyethylenes include Petrothene and Nipolon (products of Tosoh Corporation), Moretec and Evolue (products of Prime Polymer), and Harmolex and Novatec HD (products of Japan Polyethylene Corporation). A polymer blend predominantly containing the aforementioned linear low-density polyethylene or high-density polyethylene may also be employed. To the aforementioned polyethylene-based resin, known additives such as an antioxidant, a photo-stabilizer, a neutralizing agent, an α-nucleating agent, a β-nucleating agent, an anti-blocking agent, and a lubricant may be added, in such an amount that the object of the invention is not impaired. In the present invention, the term "predominant component" refers to a component preferably having a content of 90 wt.% or more, particularly preferably 95 wt.% or more. The seal layer is subjected to a thermal treatment at 60°C or higher temperature or high-pressure steam sterilization at 105°C or higher temperature while it is in contact with a drug, and a so-called "sticking"; i.e., melting of an inner surface of the container, occurs in some cases. In order to prevent sticking, the polyethylene-based resin employed in the seal layer is a linear low-density polyethylene having a melting point of 110 to 130°C and/or a high-density polyethylene having a melting point of 120 to 145°C.

In the present invention, the seal layer preferably has a thickness of 20 to 120 µm, more preferably 30 to 80 µm, from the viewpoint of maintenance of the strength of the container.

In the present invention, a base layer predominantly containing a polyolefin-based resin is preferably disposed on the surface of the barrier layer opposite to the seal layer, from the viewpoint of controlling strength and softness of the molded container. The polyolefin-based resin may be the same polyethylene-based resin as employed in the seal layer, or a polypropylene-based resin such as ethylene-propylene random or block copolymer or polypropylene-based elastomer. Among them, the aforementioned polyethylene-based resin is particularly preferred. When the base layer is laminated on the barrier layer, an adhesive layer or an adhesive resin layer may be used. Such an adhesive is preferably a two-liquid curing type polyester-urethane adhesive or polyether-urethane adhesive. The adhesive resin layer may employ a known resin so long as the resin provides excellent adhesion with respect to a counter hetero-material. Examples of the adhesive resin include Admer (product of Mitsui Chemicals, Inc.), Modic (product of Mitsubishi Chemical Co., Ltd.), DLZ (product of Tosoh Corporation), and metallocene-type linear low-density polyethylene having a density of 0.91 or lower.

When a base layer is provided in the present invention, the base layer preferably has a thickness of 30 to 200 µm, more preferably 70 to 160 µm, from the viewpoint of maintenance of the strength of the container.

In the present invention, the total thickness of the multilayer film and/or multilayer sheet is preferably 100 to 400 µm, since the liquid container is a medical-use container. When the total thickness is 100 µm or less, the container may have a decreased strength, whereas when the total thickness is in excess of 400 µm, the softness and handling performance of the container may be impaired.

Most preferably, the multilayer film and/or multilayer sheet of the present invention is a film and/or a sheet with three or more layers including a seal layer containing, as a predominant component, a linear low-density polyethylene having a melting point of 110 to 130°C and/or a high-density polyethylene having a melting point of 120 to 145°C; a barrier layer formed of a norbornene-based resin having a glass transition temperature of 130 to 170°C; and a base layer formed of a linear low-density polyethylene having a melting point of 110 to 130°C and/or a high-density polyethylene having a melting point of 120 to 145°C. In this embodiment, the barrier layer, seal layer, and base layer preferably have a thickness of 5 to 40 µm, 20 to 120 µm, and 30 to 200 µm, respectively, particularly preferably 10 to 30 µm, 30 to 80 µm, and 70 to 160 µm, respectively. In the case where the barrier layer is laminated with the seal layer and with the base layer by the mediation of an adhesive layer, the adhesive layer preferably has a thickness of 0.1 to 70 µm, particularly preferably 0.5 to 30 µm.

The multilayer film and/or multilayer sheet of the present invention may be produced through a variety of known techniques such as dry lamination, extrusion coating, extrusion lamination, co-extrusion lamination (e.g., co-extrusion blowing or co-extrusion T-die method), co-extrusion water-cooled blowing, and heat lamination. These techniques may be employed singly or in combination.

The liquid container of the present invention may be produced through, for example, a procedure which includes cutting two multilayer films through a customary method, stacking the two film pieces such that each seal layer is disposed inside, and heat-sealing the periphery of the stacked film pieces. Alternatively, the multilayer film is molded into a tube such that the seal layer is disposed inside, and the tube is heat-sealed for closure. The multilayer film is heat-sealed at 150 to 230°C.

In order to smoothly discharge the content of the liquid container, the liquid container of the present invention is preferably provided with a port member. No particular limitation is imposed on the material for the port member, so long as the material does not have such a problem that the material is readily broken by impact in the case of, for example, falling, and exhibits an excellent melt-adhesion property with respect to the aforementioned multilayer film and/or multilayer sheet. For example, a port member made of a polyethylene-based resin or a polypropylene-based material may be employed. The polyethylene-based resin is preferably a high-density polyethylene having a melting point of 120 to 145°C. Notably, when a port member made of polyethylene-based resin or polypropylene-based resin is employed, storage stability of a drug (e.g., nitroglycerin, a protein, hyaluronic acid, a vitamin, a trace element, or a radical scavenger) is not affected by adsorption and other phenomena. This unaffected storage stability may conceivably be provided due to the difference in inner surface area between the container main body and the port member. When the port member is formed from a high-density polyethylene having a melting point of 120 to 145°C, melt bonding is performed through the following procedure. A port member is preliminarily heated for several seconds and then heated once or several times at 180 to 250°C for about 2 to about 6 seconds for sealing, and the sealed product is cooled at 5 to 30°C for 1 to 5 seconds. When the port member is formed from polypropylene having a melting point 120 to 165°C, melt bonding is performed through the following procedure. A port member is preliminarily heated for several seconds and then heated once or several times at 180 to 250°C for about 2 to about 6 seconds for sealing, and the sealed product is cooled at 5 to 30°C for 1 to 5 seconds.

The liquid container of the present invention, which does not cause problems such as adsorption of a drug and exhibits excellent storage stability, can be employed for receiving a variety of liquid drugs that are adsorbed by resin. Particularly, the liquid container of the invention is suitable for producing pharmaceutical products each containing a drug such as a nitroglycerin-containing drug, a protein-containing drug, a hyaluronic acid-containing drug, a vitamin-containing drug, a trace element-containing drug, or a radical scavenger-containing drug, in the liquid container. More specifically, the liquid container is preferably employed for producing a soft bag pharmaceutical product containing a drip infusion. For producing such pharmaceutical products, the liquid container is generally subjected to a thermal treatment or high-pressure steam sterilization. In the liquid container of the present invention, no sticking (i.e., melt adhesion or adhesion of an inner surface of the container) occurs after the thermal treatment or high-pressure steam sterilization. Preferably, the thermal treatment is performed at 60°C for 10 hours, and high-pressure steam sterilization is performed at 105°C or higher for 30 minutes or longer. More preferably, high-pressure steam sterilization at 110°C for 40 minutes is performed.

When the liquid container of the present invention is employed for producing a pharmaceutical product of a nitroglycerin injection liquid, a raw drug (nitroglycerin) for producing pharmaceutical products generally employed in the art may be used. An example of the raw drug is powdered nitroglycerin-D-glucose. For producing a nitroglycerin injection liquid, the raw nitroglycerin is processed through a customary method. Specifically, the powdered nitroglycerin-D-glucose is dissolved in distilled water for injection liquid (Pharmacopoeia of Japan), and if required, a tonicity agent such as D-glucose or sodium chloride and a pH-regulator such as sodium hydroxide and hydrochloric acid are added, to thereby prepare a pharmaceutical product. No particular limitation is imposed on the nitroglycerin concentration of the pharmaceutical product of the present invention, and the concentration is preferably 0.001 to 0.1 w/v%, more preferably 0.005 to 0.05 w/v%.

### Examples

The present invention will next be described in detail by way of Examples and Comparative Examples, which should not be construed as limiting the invention thereto.

### Examples and Comparative Examples

Multilayer (3 or more layers) film samples each including a base layer, a barrier layer, and a seal layer, formed of materials shown in Table 1, were produced through co-extrusion and dry lamination in combination. Port members were produced from materials shown in Table 1 through injection molding. Liquid containers (capacity: 100 mL) were produced from the film samples having three or more layers and port members.

The following resins a to 1 and I to VI were employed for producing the film samples.
a: A 80:20 mixture of a linear low-density polyethylene (melting point: 120°C) (Moretec, products of Prime Polymer) and a linear low-density polyethylene (melting point: 105°C) (Harmolex, product of Japan Polyethylene Corporation)
b: A 85:15 mixture of a linear low-density polyethylene (melting point: 120°C) (Moretec, product of Prime Polymer) and a linear low-density polyethylene (melting point: 105°C) (Harmolex, product of Japan Polyethylene Corporation)
c: Linear low-density polyethylene (melting point: 120°C) (Petrothene, product of Tosoh Corporation)
d: Linear low-density polyethylene (melting point: 120°C) (Moretec, product of Prime Polymer)
e: High-density polyethylene (melting point: 135°C) (product of Japan Polyethylene Corporation)
f: Alumina-vapor-deposited PET film (GL, product of Toppan Printing Co., Ltd.)
g: A 80:20 mixture of a high-density polyethylene (melting point: 136°C) (Nipolon Hard, product of Tosoh Corporation) and a linear low-density polyethylene (melting point: 120°C) (Moretec, product of Prime Polymer)
h: Linear low-density polyethylene (melting point: 111°C) (Umerit, product of Ube-Maruzen polyethylene)
i: Linear low-density polyethylene (melting point: 108°C) (Harmolex, product of Japan Polyethylene Corporation)
j: Polypropylene-based elastomer (melting point: 165°C) (Zelas, product of Mitsubishi Chemical Co., Ltd.)
k: Adhesive resin (Modic, product of Mitsubishi Chemical Co., Ltd.)
l: Polypropylene (melting point: 160°C) (Novatec, product of Japan Polyethylene Corporation)

I: Polycycloolefin (glass transition temperature: 136°C) (Zeonex 690R, product of Nippon Zeon Co., Ltd.)
II: Polycycloolefin (glass transition temperature: 163°C) (1600R, product of Nippon Zeon Co., Ltd.)
III: Polycycloolefin (glass transition temperature: 135°C) (Apel APL5014DP, product of Mitsui Chemicals Inc.)
IV: Polycycloolefin (glass transition temperature: 105°C) (Zeonoa 1020R, product of Nippon Zeon Co., Ltd .), not according to the invention
V: Polycycloolefin (glass transition temperature: 75°C) (Zeonoa 750R, product of Nippon Zeon Co., Ltd.), not according to the invention
VI: A 8:2 mixture of a polycycloolefin (glass transition, temperature: 145°C) (Apel APL6015T, product of Mitsui Chemicals Inc.) and a linear low-density polyethylene (Evolue, product of Prime Polymer)

Examples 7 and 9 are also Comparative Examples.

**[Table 1]**

| | | Examples | | | | | | | | | Comparative Examples | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| Base layer | Resin | a | a | a | d | a | g | j | e | a | d | d | d | a | h |
| | Thickness (µm) | 155 | 160 | 155 | 170 | 155 | 150 | 155 | 155 | 155 | 170 | 170 | 171 | 200 | 170 |
| Gas barrier layer | Resin | - | - | - | - | f | - | - | - | - | - | - | - | - | - |
| | Thickness (µm) | - | - | - | - | 12 | - | - | - | - | - | - | - | - | - |
| Adhesive layer | Type | - | - | - | - | - | - | k | a | - | - | - | - | - | - |
| | Thickness (µm) | - | - | - | - | - | - | 10 | 10 | - | - | - | - | - | - |
| Barrier layer | Resin | I | I | II | III | I | I | I | I | V | IV | V | VI | - | IV |
| | Thickness (µm) | 25 | 15 | 20 | 25 | 25 | 30 | 25 | 25 | 25 | 30 | 25 | 25 | - | 30 |
| Adhesive layer | Type | - | - | - | - | - | - | k | a | - | - | - | - | - | - |
| | Thickness (µm) | - | - | - | - | - | - | 10 | 10 | - | - | - | - | - | - |
| Seal layer | Resin | b | c | b | d | b | g | j | e | b | d | c | c | I | i |
| | Thickness (µm) | 70 | 75 | 70 | 50 | 70 | 70 | 50 | 50 | 70 | 50 | 50 | 70 | 50 | 50 |
| Port member | Resin | e | e | e | e | e | e | l | e | e | d | e | e | I | d |

### Test Example 1: Storage test

In each of the liquid container produced in the Examples and Comparative Examples, 0.05% nitroglycerin injection liquid (100 mL) was packed. The container was subjected to high-pressure steam sterilization at 110°C and 0.106 MPa for 40 minutes. After sterilization, the appearance of the container was observed to evaluate occurrence of sticking. Thereafter, a storage test was performed at 40°C. The nitroglycerin concentration of each pharmaceutical product was determined one month and three months after the start of the storage test, through high- performance liquid chromatography (HPLC). The ratio of the measured concentration to the initial concentration was employed as a percent maintenance of nitroglycerin. Table 2 shows the results.

### Test Example 2: Falling test

The impact resistance of the liquid container of the present invention was evaluated through a falling test. Similar to Test Example 1, a drug was packed in each of the liquid containers of the Examples and Comparative Examples, and the container was subjected to high-pressure steam sterilization. The treated container was stored at 5°C for 48 hours. Thereafter, the container was allowed to fall from a height of 1.80 m to the ground. Fallings were repeated for ten times, and the appearance of the container was observed. Then, the container was placed on an iron plate having no foreign objects on a surface thereof and pushed by hand. The presence of breakage (cracking) of the container and leakage were checked. In each Example, 100 containers were tested. Table 2 shows the results.

**[Table 2]**

| | | Examples | | | | Comparative Examples | | | |
|---|---|---|---|---|---|---|---|---|---|
| | | 1 | 2 | 3 | 7 | 1 | 2 | 3 | 4 |
| Storage test | | | | | | | | | |
| Sticking | | no | no | no | no | no | no | no | no |
| Effective component maintenance (%) | Month 1 | 99.6 | 99.0 | 99.9 | 99.3 | 93.0 | 90.0 | 91.0 | 99.3 |
| | Month 3 | 98.0 | 98.6 | 99.9 | 98.1 | - | - | - | - |
| Falling test (breakage/leakage) | | no | no | no | no | no | no | no | yes |

As shown in Table 2, liquid containers falling within the scope of the present invention exhibited no substantial change in nitroglycerin content after storage at 40°C for three months. In contrast, a container including a barrier layer formed of a polycycloolefin-based resin having a glass transition temperature of 105°C (Comparative Example 1), a container including a barrier layer formed of a polycycloolefin-based resin having a glass transition temperature of 75°C (Comparative Example 2), and a container including a barrier layer formed of a resin mixture of a polycycloolefin-based resin having a glass transition temperature of 145°C and a linear low-density polyethylene (Comparative Example 3) exhibited large decreases in nitroglycerin content after storage at 40°C for one month; specifically, 7%, 10%, and 9%, respectively.

None of the liquid containers falling within the scope of the present invention exhibited breakage or leakage after the falling test, indicating that the liquid containers of the invention have been found to have high resistance to impact by falling. In contrast, in Comparative Example 4, wherein a bag was produced from a seal layer formed of a polycycloolefin-based resin having a glass transition temperature of 136°C and a port member formed of a polycycloolefin-based resin having a glass transition temperature of 136°C, leakage through the port member was confirmed after the falling test, although satisfactory storage stability was attained.

### Test Example 3

The procedure of Test Examples 1 and 2 was repeated, except that 20% albumin injection liquid was used as a drug, and a thermal treatment at 60°C for 10 hours was performed instead of high-pressure steam sterilization. Table 3 shows the results. Human plasma-derived albumin was packed in the container of Example 1, and albumin produced through a recombination technique was packed in the containers of the other Examples and Comparative Examples.

**[Table 3]**

| | | Examples | | | | Comp. Exs. | |
|---|---|---|---|---|---|---|---|
| | | 1 | 2 | 5 | 9 | 2 | 3 |
| Storage test | | | | | | | |
| Sticking | | no | no | no | no | no | no |
| Effective component maintenance (%) | Month 1 | 98.1 | 98 | 98.4 | 98.1 | 94.0 | 93.0 |
| | Month 3 | 97.0 | 97.5 | 97.9 | 97.2 | - | - |
| Falling test (breakage/leakage) | | no | no | no | no | no | no |

As shown in Table 3, similar to the case of nitroglycerin, liquid containers falling within the scope of the present invention exhibited no substantial change in albumin content after storage at 40°C for three months. In contrast, a container including a barrier layer formed of a polycycloolefin-based resin having a glass transition temperature of 75°C (Comparative Example 2) and a container including a barrier layer formed of a resin mixture of a polycycloolefin-based resin having a glass transition temperature of 145°C and a linear low-density polyethylene (Comparative Example 3) exhibited large decreases in albumin content after storage at 40°C for one month; specifically, 6% and 7%, respectively.

None of the liquid containers falling within the scope of the present invention exhibited breakage or leakage even after the thermal treatment at 60°C for 10 hours, indicating that the liquid containers of the invention have been found to have high resistance to impact by falling.

### Test Example 4

The procedure of Test Examples 1 and 2 was repeated, except that the drug was changed to a vitamin D3-containing pharmaceutical product, and high-pressure steam sterilization was performed at 105°C and 0.106 MPa for 30 minutes. Table 4 shows the results.

**[Table 4]**

| | | Examples | | | Comp. Exs. | | |
|---|---|---|---|---|---|---|---|
| | | 1 | 2 | 7 | 1 | 2 | 3 |
| Storage test | | | | | | | |
| Sticking | | no | no | no | no | no | no |
| Effective component maintenance (%) | Month 1 | 97.0 | 97.1 | 97.1 | 90.3 | 90.0 | 89.0 |
| | Month 3 | 96.5 | 96.3 | 97.2 | - | - | - |
| Falling test (breakage/leakage) | | no | no | no | no | no | no |

As shown in Table 4, similar to the cases of nitroglycerin and albumin, liquid containers falling within the scope of the present invention exhibited no substantial change in vitamin D3 content after storage at 40°C for three months. In contrast, a container including a barrier layer formed of a polycycloolefin-based resin having a glass transition temperature of 105°C (Comparative Example 1), a container including a barrier layer formed of a polycycloolefin-based resin having a glass transition temperature of 75°C (Comparative Example 2), and a container including a barrier layer formed of a resin mixture of a polycycloolefin-based resin having a glass transition temperature of 145°C and a linear low-density polyethylene (Comparative Example 3) exhibited large decreases in vitamin D3 content after storage at 40°C for one month; specifically, 6.7%, 7%, and 9%, respectively.

None of the liquid containers falling within the scope of the present invention exhibited breakage or leakage when the content was vitamin D3, indicating that the liquid containers of the invention have been found to have high resistance to impact by falling.

### Test Example 5

The procedure of Test Examples 1 and 2 was repeated, except that the drug was changed to a radical scavenger-containing pharmaceutical product (edaravone), and high-pressure steam sterilization was performed at 105°C and 0.106 MPa for 30 minutes. Table 5 shows the results.

**[Table 5]**

| | | Examples | | | Comp. Exs. | | |
|---|---|---|---|---|---|---|---|
| | | 1 | 2 | 8 | 2 | 3 | 5 |
| Storing test | | | | | | | |
| Sticking | | no | no | no | no | no | yes |
| Effective component maintenance (%) | Month 1 | 98.0 | 98.1 | 98.1 | 89.3 | 88.9 | 88.7 |
| | Month 3 | 97.5 | 97.3 | 97.3 | - | - | - |
| Falling test (breakage/leakage) | | no | no | no | no | no | no |

As shown in Table 5, similar to the cases of nitroglycerin and albumin, liquid containers falling within the scope of the present invention exhibited no substantial change in edaravone (radical scavenger) content after storage at 40°C for three months. In contrast, a container including a barrier layer formed of a polycycloolefin-based resin having a glass transition temperature of 75°C (Comparative Example 2) and a container including a barrier layer formed of a resin mixture of a polycycloolefin-based resin having a glass transition temperature of 145°C and a linear low-density polyethylene (Comparative Example 3) exhibited large decreases in edaravone content after storage at 40°C for one month; specifically, 11% and 11.1%, respectively.

In the liquid container of Comparative Example 5, having a base layer and a seal layer formed of polyethylene having a melting point of 120°C or lower temperature, sticking occurred in portions inside thereof. The outside of the container was very sticky after sterilization, and one container was stuck to another container, which was problematic.

None of the liquid containers falling within the scope of the present invention exhibited breakage or leakage when the content was edaravone, indicating that the liquid containers of the invention have been found to have high resistance to impact by falling.

## Claims

1. A liquid container formed of a multilayer film and/or multilayer sheet, **characterized in that** the multilayer film and/or multilayer sheet has a barrier layer comprising, as a predominant component, a polycycloolefin-based resin having a glass transition temperature higher by 5°C or more than the temperature at which the container is subjected to thermal treatment or high-pressure steam sterilization, and a seal layer comprising, as a predominant component, a polyethylene-based resin, and the barrier layer being provided adjacent to the seal layer,
wherein the polyethylene-based resin is a linear low-density polyethylene having a melting point of 110 to 130°C and/or a high-density polyethylene having a melting point of 120 to 145°C, and
wherein the polycycloolefin-based resin is represented by formula (1): 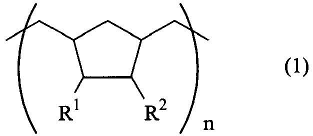 wherein R¹ and R², which are identical to or different from each other, each represent a C1 to C20 organic group, and R¹ and R² may be linked to form a ring, and n is an integer of ≥1,
wherein the polycycloolefin-based resin is a polycycloolefin-based resin having a glass transition temperature of 130°C or higher.

2. The liquid container according to claim 1, wherein the multilayer film and/or multilayer sheet has, on the surface of the barrier layer opposite to the seal layer, a base layer predominantly comprising linear low-density polyethylene having a melting point of 110 to 130°C and/or high-density polyethylene having a melting point of 120 to 145°C.

3. The liquid container according to any one of claims 1 or 2, which has a port member formed of a polyethylene-based resin or a polypropylene-based resin.

4. The liquid container according to claim 1, wherein the barrier layer is formed solely of a polycycloolefin-based resin.

5. The liquid container according to any one of claims 1 to 4, which is subjected to a thermal treatment at 60°C or higher or high-pressure steam sterilization at 105°C or higher.

6. A pharmaceutical product for injection liquid, the pharmaceutical product comprising the liquid container according to any one of claim 1 to 5, filled by a solution of a drug that can be adsorbed by a resin and/or that can permeate a resin.

7. The pharmaceutical product according to claim 6, wherein the drug which can be adsorbed by a resin and/or which can permeate a resin is a nitroglycerin-containing drug.

8. The pharmaceutical product according to claim 6, wherein the drug which can be adsorbed by a resin and/or which can permeate a resin is a protein-containing drug, a hyaluronic acid-containing drug, a vitamin-containing drug, a trace element-containing drug, or a radical scavenger-containing drug.

9. The pharmaceutical product according to claim 8, wherein the protein-containing drug is a drug containing human plasma-derived albumin, albumin produced through a recombination technique, or a hormone.

## Patentansprüche

1. Flüssigkeitsbehälter, gebildet aus einem Mehrschichtfilm und/oder einer Mehrschichtfolie, **dadurch gekennzeichnet, dass** der Mehrschichtfilm und/oder die Mehrschichtfolie eine Sperrschicht aufweist, die als vorherrschenden Bestandteil ein auf Polycycloolefin basierendes Harz umfasst, das eine Glasübergangstemperatur aufweist, die 5°C oder höher ist als die Temperatur, bei der der Behälter einer Wärmebehandlung oder einer Hochdruck-Dampfsterilisation unterzogen wird, und eine Versiegelungsschicht, die als vorherrschen Bestandteil ein auf Polyethylen basierendes Harz umfasst, und die Sperrschicht angrenzend an die Versiegelungsschicht bereitgestellt wird,
wobei das auf Polyethylen basierende Harz ein lineares Polyethylen geringer Dichte ist, das einen Schmelzpunkt von 110 bis 130°C aufweist, und/oder ein Polyethylen hoher Dichte, das einen Schmelzpunkt von 120 bis 145°C aufweist, und
wobei das auf Polycycloolefin basierende Harz durch die Formel (1) wiedergegeben wird: 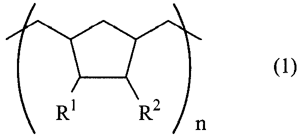 wobei R¹ und R², die identisch oder voneinander verschieden sind, jeweils für eine organische C1- bis C20-Gruppe stehen und R¹ und R² verbunden sein können, um einen Ring zu bilden, und n eine ganze Zahl von ≥ 1 ist,
wobei das auf Polycycloolefin basierende Harz ein auf Polycycloolefin basierendes Harz ist, das eine Glasübergangstemperatur von 130°C oder höher aufweist.

2. Flüssigkeitsbehälter nach Anspruch 1, wobei der Mehrschichtfilm und/oder die Mehrschichtfolie auf der Oberfläche der Sperrschicht, gegenüber der Versiegelungsschicht eine Basisschicht aufweist, die vorherrschend ein lineares Polyethylen geringer Dichte umfasst, das einen Schmelzpunkt von 110 bis 130°C aufweist, und/oder ein Polyethylen hoher Dichte, das einen Schmelzpunkt von 120 bis 145°C aufweist.

3. Flüssigkeitsbehälter nach einem der Ansprüche 1 oder 2, welcher ein Anschlusselement aufweist, das aus einem auf Polyethylen basierenden Harz oder einem auf Polypropylen basierenden Harz gebildet ist.

4. Flüssigkeitsbehälter nach Anspruch 1, wobei die Sperrschicht ausschließlich aus einem auf Polycycloolefin basierenden Harz gebildet ist.

5. Flüssigkeitsbehälter nach einem der Ansprüche 1 bis 4, welcher einer Wärmebehandlung bei 60°C oder höher oder einer Hochdruck-Dampfsterilisation bei 105°C oder höher unterzogen wird.

6. Pharmazeutisches Produkt für eine Injektionsflüssigkeit, wobei das pharmazeutische Produkt einen Flüssigkeitsbehälter nach einem der Ansprüche 1 bis 5 umfasst, der mit einer Lösung eines Arzneimittels gefüllt ist, das von einem Harz adsorbiert werden kann und/oder das ein Harz durchdringen kann.

7. Pharmazeutisches Produkt nach Anspruch 6, wobei das Arzneimittel, das von dem Harz adsorbiert werden kann und/oder das das Harz durchdringen kann, ein Nitroglycerinhaltiges Arzneimittel ist.

8. Pharmazeutisches Produkt nach Anspruch 6, wobei das Arzneimittel, das von dem Harz adsorbiert werden kann und/oder das das Harz durchdringen kann, ein Protein-haltiges Arzneimittel ist, ein Hyaluronsäure-haltiges Arzneimittel, ein Vitamin-haltiges Arzneimittel, ein Spurenelement-haltiges Arzneimittel oder ein Radikalfänger-haltiges Arzneimittel.

9. Pharmazeutisches Produkt nach Anspruch 8, wobei das Protein-haltige Arzneimittel ein Arzneimittel ist, das von menschlichem Plasma stammendes Albumin, Albumin, das durch ein Rekombinationsverfahren hergestellt wurde, oder ein Hormon enthält.

## Revendications

1. Récipient pour liquide formé d'un film multicouche et/ou d'une feuille multicouche, **caractérisé en ce que** le film multicouche et/ou la feuille multicouche comporte(nt) une couche de barrière comprenant, en tant que composant principal, une résine à base de polycyclooléfine présentant une température de transition vitreuse supérieure de 5°C ou plus à la température à laquelle le récipient est soumis à un traitement thermique ou à une stérilisation à la vapeur sous pression élevée, et une couche d'étanchéité comprenant, en tant que composant principal, une résine à base de polyéthylène, la couche de barrière étant disposée adjacente à la couche d'étanchéité,
dans lequel la résine à base de polyéthylène est un polyéthylène basse densité linéaire présentant un point de fusion de 110 à 130°C et/ou un polyéthylène haute densité présentant un point de fusion de 120 à 145°C, et
dans lequel la résine à base de polycyclooléfine est représentée par la formule (1) : 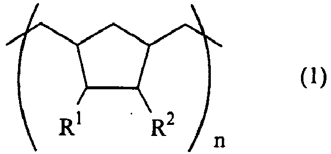 dans laquelle chacun de R¹ et R², qui sont identiques ou différents, représente un groupe organique en C1 à C20, et R¹ et R² peuvent être liés pour former un cycle, et n est un entier ≥ 1,
et dans lequel la résine à base de polycyclooléfine est une résine à base de polycyclooléfine présentant une température de transition vitreuse de 130°C ou plus.

2. Récipient pour liquide selon la revendication 1, dans lequel le film multicouche et/ou la feuille multicouche comporte(nt), sur la surface de la couche de barrière opposée à la couche d'étanchéité, une couche de base comprenant principalement un polyéthylène basse densité linéaire présentant un point de fusion de 110 à 130°C et/ou un polyéthylène haute densité présentant un point de fusion de 120 à 145°C.

3. Récipient pour liquide selon l'une quelconque des revendications 1 et 2, qui comporte un élément d'orifice formé d'une résine à base de polyéthylène ou d'une résine à base de polypropylène.

4. Récipient pour liquide selon la revendication 1, dans lequel la couche de barrière est formée uniquement d'une résine à base de polycyclooléfine.

5. Récipient pour liquide selon l'une quelconque des revendications 1 à 4, qui est soumis à un traitement thermique à 60°C ou plus ou à une stérilisation à la vapeur sous pression élevée à 105°C ou plus.

6. Produit pharmaceutique pour liquide injectable, lequel produit pharmaceutique comprend le récipient pour liquide selon l'une quelconque des revendications 1 à 5, rempli d'une solution d'un médicament qui peut être adsorbé par une résine et/ou qui peut traverser une résine par perméation.

7. Produit pharmaceutique selon la revendication 6, dans lequel le médicament qui peut être adsorbé par une résine et/ou qui peut traverser une résine par perméation est un médicament contenant de la nitroglycérine.

8. Produit pharmaceutique selon la revendication 6, dans lequel le médicament qui peut être adsorbé par une résine et/ou qui peut traverser une résine par perméation est un médicament contenant une protéine, un médicament contenant de l'acide hyaluronique, un médicament contenant une vitamine, un médicament contenant un oligo-élément ou un médicament contenant un piégeur de radicaux.

9. Produit pharmaceutique selon la revendication 8, dans lequel le médicament contenant une protéine est un médicament contenant de l'albumine dérivée de plasma humain, de l'albumine produite par une technique de recombinaison, ou une hormone.
